**Europäisches Patentamt**

**European Patent Office**

**Office européen des brevets**

(11) Veröffentlichungsnummer: **0 248 306
B1**

(12) **EUROPÄISCHE PATENTSCHRIFT**

(45) Veröffentlichungstag der Patentschrift:
22.08.90

(21) Anmeldenummer: **87107564.4**

(22) Anmeldetag: **23.05.87**

(51) Int. Cl.⁵: **B29C 49/04, B29C 49/42**

(54) Verfahren und Vorrichtung zum Blasformen von gekrümmten Hohlkörpern aus Kunststoff.

(30) Priorität: **31.05.86  DE 3618446**

(43) Veröffentlichungstag der Anmeldung:
**09.12.87 Patentblatt 87/50**

(45) Bekanntmachung des Hinweises auf die Patenterteilung:
**22.08.90 Patentblatt 90/34**

(84) Benannte Vertragsstaaten:
**AT BE CH ES FR GB GR IT LI LU NL SE**

(73) Patentinhaber: **Etimex Kunstoffwerke GmbH,
Heilbronner Strasse 43, D-7000 Stuttgart 1(DE)**

(72) Erfinder: **Wenger, Günter, Mörikestrasse 2,
D-7935 Rottenacker(DE)**
Erfinder: **Schick, Robert, Stauferring 10,
D-7932 Munderkingen(DE)**

(74) Vertreter: **Hoeger, Stellrecht & Partner,
Uhlandstrasse 14 c, D-7000 Stuttgart 1(DE)**

(56) Entgegenhaltungen:
DE-A- 2 141 091
DE-A- 2 927 098
DE-A- 3 038 590
US-A- 3 608 017
US-A- 4 026 983

PATENT ABSTRACTS OF JAPAN, Band 5,
Nr. 166 (M-93)[838], 23. Oktober 1981; &
JP-A-56 92 026 (INOUE EMU TEE PII K.K.) 25-07-1981
PATENT ABSTRACTS OF JAPAN, Band 2, Nr. 155, 26.
Dezember 1978, Seite 3757 C 78; &
JP-A-53 121 062 (MATSUSHITA DENKO K.K.) 23-10-1978

## Beschreibung

Die Erfindung betrifft ein Verfahren nach dem Oberbegriff des Patentanspruchs 1. Weiterhin betrifft die Erfindung eine Vorrichtung nach dem Oberbegriff des Patentanspruchs 2.

Bei einem bekannten Verfahren und einer bekannten Vorrichtung dieser Art (JP-PA 53-121062) wird der noch mit der Extruderdüse verbundene, extrudierte Vorformling an seinem unteren, freien Ende von einem Haltebolzen erfaßt, durch Verschieben des Bolzens U-förmig gekrümmt und an der Innenfläche der einen Formhälfte befestigt. Auf diese Weise können jedoch lediglich Krümmungen des Vorformlings in einer Ebene, nicht jedoch im dreidimensionalen Raum erzielt werden.

Bei einem weiteren bekannten Verfahren zum Blasformen von gekrümmten Hohlkörpern aus Kunststoff (DE-PS 29 27 098) wird der Vorformling während seiner Extrusion aus der Düse sofort in einen zwei- oder dreidimensional gekrümmten Formhohlraum einer unteren Formhälfte eingelegt, wozu entweder die Formhälte oder die Düse entsprechend räumlich bewegt werden müssen. Dabei besteht der Nachteil, daß große Massen verschoben werden müssen, nämlich in einem Fall die untere Formhälfte und im anderen Fall der gesamte, die Düse tragende Extruder. Außerdem kühlt sich der in die untere Formhälfte eingelegte, untere Teil des Vorformlings stärker ab, als der noch freiliegende obere Abschnitt, so daß nach dem Aufbringen der oberen Formhälfte ein ungleichmäßig erhitzter Formling aufgeblasen werden muß, was zu unvollkommen geblasenen Hohlkörpern mit unterschiedlicher Wandstärke führen kann.

Es ist Aufgabe der Erfindung, diesen Mängeln abzuhelfen und ein gattungsgemäßes Verfahren vorzuschlagen, bei dem der Vorformling dreidimensional gekrümmt werden kann, keine großen Massen bewegt werden müssen und der Vorformling während des Krümmvorgangs im wesentlichen keine unterschiedliche Abkühlung erfährt.

Die Aufgabe wird erfindungsgemäß durch die kennzeichnenden Merkmale des Patentanspruchs 1 gelöst.

Eine Vorrichtung zur Durchführung des erfindungsgemäßen Verfahrens ist Gegenstand des Patentanspruchs 2. Merkmale von bevorzugten Ausführungsformen dieser Vorrichtung sind in den Unteransprüchen 3 bis 6 niedergelegt.

Die nachstehende Beschreibung bevorzugter Ausführungs formen der Erfindung dient im Zusammenhang mit beiliegender Zeichnung der weiteren Erläuterung. Es zeigen:

Fig. 1 eine schematische Seitenansicht einer Vorrichtung zum Blasformen von gekrümmten Kunststoff-Hohlkörpern;

Fig. 2 und 3 schematisch verschiedene Seitenansichten einer Aufnahmeeinrichtung zum Aufnehmen und Festhalten eines schlauchförmig extrudierten Vorformlings;

Fig. 4 eine Schnittansicht entlang der Linie 4-4 in Fig. 3;

Fig. 5 eine Ansicht ähnlich Fig. 3 mit gekrümmter Aufnahmeeinrichtung;

Fig. 6 die Aufnahmeeinrichtung nach ihrer Verschwenkung in die Horizontale;

Fig. 7 eine Ansicht ähnlich Fig. 6 nach Überführung des Vorformlings von der Aufnahmeeinrichtung in die untere Formhälfte einer Blasform;

Fig. 8 eine Ansicht ähnlich Fig. 7 mit einer oberen Formhälfte der Blasform;

Fig. 9 eine andere Ausführungsform einer Aufnahmeeinrichtung für den Rohling mit Mitteln zum Vorkrümmen des Rohlings;

Fig. 10 die Einrichtung aus Fig. 9 in einer anderen Arbeitsstellung; und

Fig. 11 eine Schnittansicht entlang der Linie 11-11 in Fig. 10.

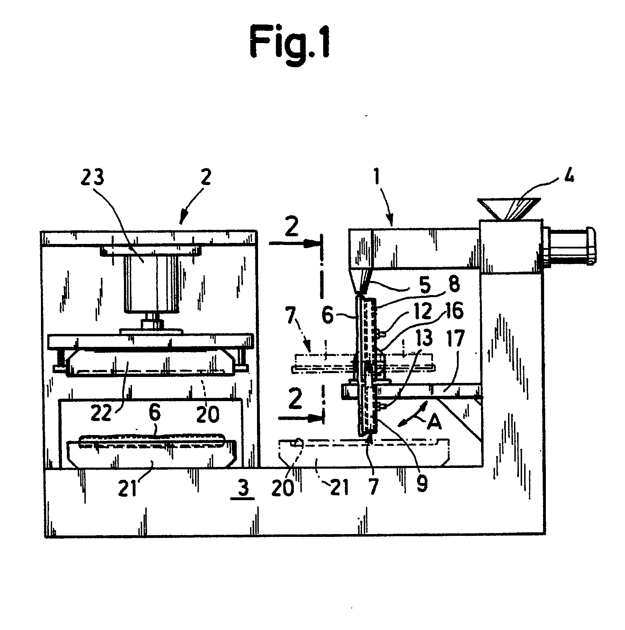

Die Fig. 1 zeigt schematisch einen Extruder 1, der zusammen mit einer Blasform 2 auf einem gemeinsamen Maschinenrahmen 3 angeordnet ist. In einen Fülltrichter 4 eingegebenes Kunststoffmaterial, beispielsweise Polyäthylen oder Polypropylen, wird im Extruder in bekannter Weise geschmolzen und über eine nicht dargestellte Transportschnecke einer Düse 5 mit Innendorn zugeleitet, aus welcher der Kunststoff vertikal von oben nach unten in Gestalt eines schlauchförmigen Vorformlings 6 bestimmter Länge austritt. Nachdem die gewünschte Extrusionslänge des Vorformlings 6 erreicht ist, wird er an seinem oberen Ende von der Düse 5 abgeschnitten. Dieser Zustand ist in Fig. 1 dargestellt.

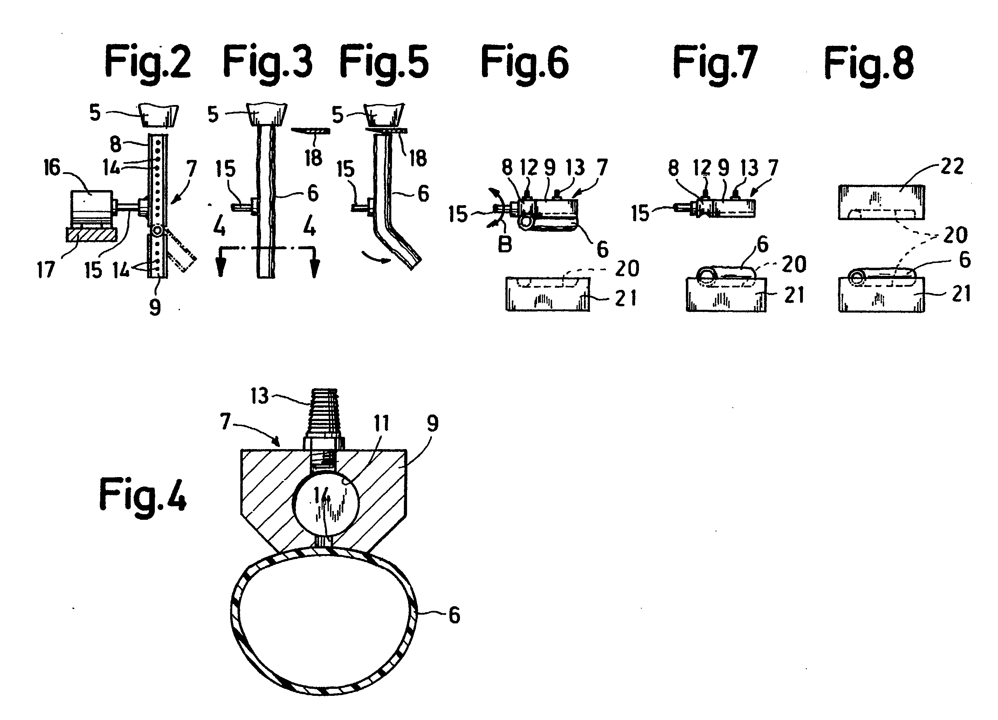

Die Extrusion des schlauchförmigen Vorformlings aus der Düse 5 erfolgt entlang einer Aufnahmeeinrichtung 7, die mit Blickrichtung entlang den Pfeilen 2 in Fig. 1 in Fig. 2 in Vorderansicht dargestellt ist. Die Aufnahmeeinrichtung 7 umfaßt bei der dargestellten Ausführungsform eine aus zwei gelenkig miteinander verbundenen, im wesentlichen geradlinigen Teilen 8,9 bestehende Leiste, deren Querschnittsform aus Fig. 4 ersichtlich ist. Beide Leistenteile 8,9 weisen einen längsaxial verlaufenden, am oberen und unteren Ende jeweils geschlossenen Hohlraum 11 auf, der über Nippel 12, 13 an eine (nicht dargestellte) Unterdruckquelle angeschlossen werden kann. Vom Hohlraum 11 führen Bohrungen 14 zur Vorderseite der Leistenteile 8,9.

Die Gelenkverbindung der beiden Teile 8,9 ist so, daß eine Relativverschwenkung in der Zeichnungsebene der Fig. 2, wie strichpunktiert angedeutet, möglich ist.

Der eine Leistenteil 8 ist mit der Welle 15 eines Elektromotors 16 verbunden, der seinerseits auf einer Konsole 17 des Maschinenrahmens 3 abgestützt ist. Mit Hilfe des Motors 16 kann die leistenförmige Aufnahmeeinrichtung 7 aus der dargestellten vertikalen in eine in Fig. 1 strichpunktiert angedeutete Horizontallage und wieder zurück verschwenkt werden, wobei die Verschwenkung in Richtung des Doppelpfeiles A in Fig. 1 erfolgt.

Die Relativverschwenkung der beiden Leistenteile 8,9 erfolgt über an sich bekannte, nicht dargestellte Mittel, beispielsweise pneumatisch.

Wie dargestellt, erfolgt die Extrusion des Vorformlings 6 aus der Düse 5 entlang der Aufnahmeeinrichtung 7 in unmittelbarer Nähe der äußeren Öffnungen der unter Unterdruckwirkung versetzbaren Bohrungen 14. Wenn der Vorformling 6 in der gewünschten Länge entlang der Aufnahmeeinrichtung 7 extrudiert ist, wird der Hohlraum 11 in den Leistenteilen 8,9 unter Unterdruck versetzt, so daß der schlauchförmige Vorformling 6 angesaugt und an der Aufnahmeeinrichtung 7 festgehalten ist.

Anschließend erfolgt mit an sich bekannten, in Fig. 3 und 5 angedeuteten Schneidmitteln 18 die Abtrennung des oberen Endes des Vorformlings 6 von der Düse 5.

Anschließend wird durch Verschwenken des unteren Leistenteils 9 der Vorformling 6 in der aus Fig. 5 ersichtlichen Weise vorgekrümmt.

Hierauf wird durch Betätigen des Motors 16 die Aufnahmeeinrichtung 7 zusammen mit dem daran gehaltenen Vorformling 6 um 90° entlang dem Pfeil B in die Horizontale verschwenkt (Fig. 6).

Wie aus Fig. 1 und 6 hervorgeht, ist unterhalb der Düse 5 und der Aufnahmeeinrichtung die untere Formhälfte 21 einer Blasform mit Formvertiefung 20 angeordnet. Der räumliche Verlauf der Formvertiefung 20 entspricht der Gestalt des vorgekrümmten Vorformlings 6 (Fig. 5).

Durch Abschalten des Unterdrucks in der Aufnahmeeinrichtung 7 läßt man den vorgekrümmten Vorformling 6 nunmehr in die untere Formhälfte 21 fallen. Anschließend wird - vgl. Fig. 8 - die untere Formhälfte 21 mit einer oberen Formhälfte 22, die eine entsprechende Formvertiefung 20 aufweist, zusammengeführt. Nach dem Aufsetzen der oberen Formhälfte 22 auf die untere Formhälfte 21 erfolgt in an sich bekannter Weise das Aufblasen des Vorformlings 6 zur gewünschten Hohlkörperform.

Wie in Fig. 1 dargestellt, ist die obere Formhälfte 22 mittels eines am Maschinenrahmen 3 befestigten Kolben-Zylinder-Aggregates 23 auf- und abbewegbar. Die untere Formhälfte 21, die sich zunächst unterhalb der Aufnahmeeinrichtung 7 befindet (in Fig. 1 strichpunktiert dargestellt) wird mit dem eingebrachten Vorformling 6 unter die obere Formhälfte 22 gebracht. Hierauf wird die obere Formhälfte 22 auf die untere Formhälfte abgesenkt und der Vorformling 6 aufgeblasen.

Wie dargestellt und beschrieben, muß bei der Vorkrümmung des Vorformlings 6 (Fig. 5) lediglich das untere Leistenteil 9 der Aufnahmeeinrichtung 7 verschwenkt werden. Hierzu genügt ein kleiner, z.B. pneumatischer Antriebsmotor geringer Leistung. Es müssen also im Gegensatz zum Stande der Technik zum Vorkrümmen des Vorformlings keine schweren Massen mit großem Kraftaufwand bewegt werden. Da außerdem die Berührungsfläche zwischen Vorformling 6 und Aufnahmeeinrichtung 7 (vgl. Fig. 4) verhältnismäßig klein ausgebildet werden kann, verliert der Vorformling 6 während seines Festhaltens an der Aufnahmeeinrichtung 7 lokal nur wenig Wärme an diese Einrichtung, so daß ein im wesentlichen gleichmäßig temperierter Vorformling 6 in die Blasform 21,22 eingebracht und dort mit gleichmäßiger Wandstärke aufgeblasen werden kann.

Bei der dargestellten Ausführungsform wird der Vorformling 6 durch das Verschwenken des Leistenteils 9 lediglich ein einziges Mal (in der Zeichnungsebene der Fig. 2,3 und 5) gekrümmt. Um eine mehrfache Krümmung zu erzielen, muß die Aufnahmeeinrichting 7 aus mehreren gelenkig miteinander verbundenen Leistenteilen bestehen. Dabei ist es möglich, den Vorformling 6 nicht nur in einer Ebene, also zweidimensional zu krümmen, sondern auch eine Krimmung in drei Dimensionen vorzunehmen. Hierzu muß die Gelenkachse des betreffenden Leistenteils senkrecht zu der in Fig. 2 dargestellten Gelenkachse zwischen den Leistenteilen 8 und 9 verlaufen. Hierdurch ist auch eine Krümmung des Vorformlings 6 aus der Zeichnungsebene der Figuren 2, 3 und 5 heraus möglich. Der so dreidimensional vorgekrümmte Vorformling 6 wird dann in Formhälften 21, 22 eingebracht, deren Formvertiefungen 20 in entsprechender Weise dreidimensional gekrümmt verlaufen. Auf diese Weise lassen sich auch verhältnismäßig komplizierte Formen von extrusionsgeblasenen Hohlkörpern herstellen.

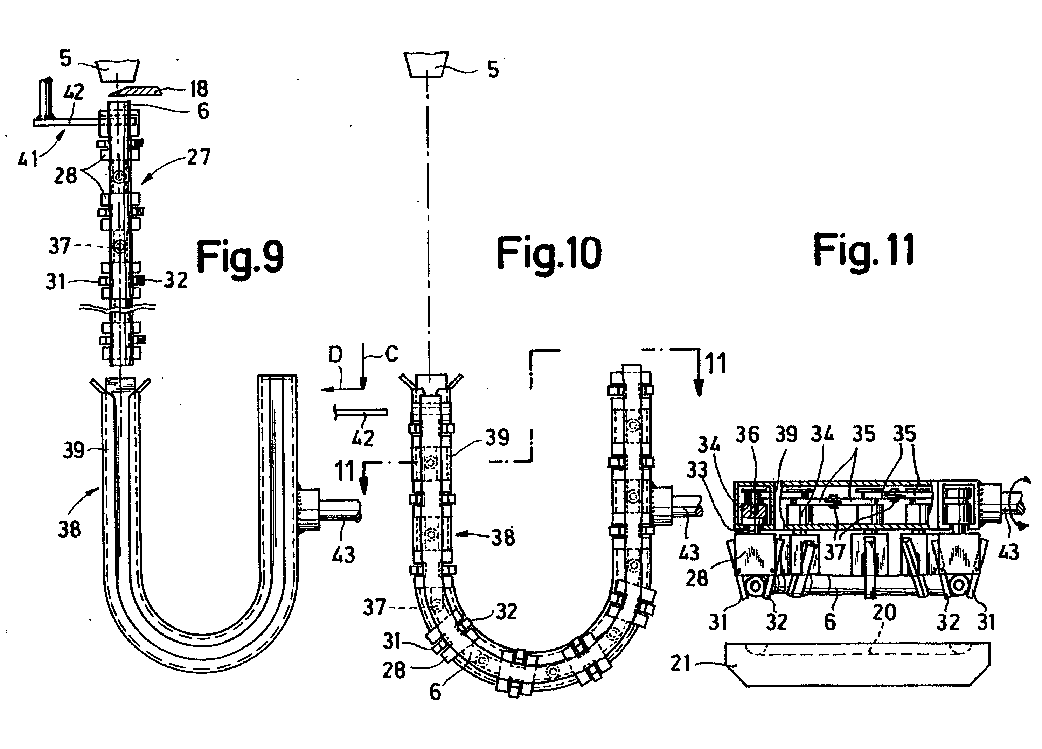

Die Figuren 9, 10 und 11 zeigen eine andere Ausführungsform einer Einrichtung zum Aufnehmen und Vorkrümmen frisch extrudierter, heißer Vorformlinge.

Unterhalb der Düse 5 und der Schneideinrichtung 18 ist parallel zur Extrusionsrichtung, also vertikal eine Aufnahmekette 27 angeordnet, deren Kettenglieder von gelenkig miteinander verbundenen Blöcken 28 gebildet werden. Wie Fig. 10 zeigt, können beispielsweise 10 Blöcke 28 vorgesehen sein, von denen in der abgebrochenen Darstellung der Fig. 9 nur vier Blöcke sichtbar sind. Jeder Block 28, vgl. Fig. 11, weist zwei schwenkbar gelagerte und durch einen (nicht dargestellten z.B. elektromagnetischen oder pneumatischen) Kraftantrieb betätigbare Backen 31,32 zum Einklemmen eines Vorformlings 6 (Fig. 11) auf. Von den Blöcken 28 stehen Zapfen 33 ab, die an ihren freien Enden Führungsköpfe 34 tragen. Zwischen den Führungsköpfen 34 der einzelnen Blöcke 28 verlaufen zur Herstellung einer gelenkigen Kettenverbindung Gelenklaschen 35 in zwei übereinanderliegenden Lagen, die untereinander durch Bolzen 37 und mit den Köpfen 34 durch Schraubstifte 36 gelenkig verbunden sind.

Der Aufnahmekette 27 ist eine Führungseinrichtung 38 in Gestalt eines gekrümmten Profilrohres 39 von C-förmigem Querschnitt zugeordnet. Der Innenquerschnitt des Profilrohres 39 ist so bemessen, daß das Rohr die Köpfe 34 der Blöcke 28 mit den zugehörigen Gelenkverbindungen aufnehmen und führen kann, wie in Fig. 10 und 11 dargestellt ist, wobei die Blöcke 28 mit den Backen 31, 32 an der Außenseite des Rohres 39 entsprechend dessen Krümmung geführt werden.

Weiterhin ist eine kraftbetätigte Schiebeeinrichtung 41 mit einem Mitnehmerarm 42 vorgesehen. Der Arm 42 kann in Richtung des Pfeiles C (Fig. 9) auf- und abwärts sowie in Richtung des Pfeiles D seitlich hin- und herverschoben werden.

Durch Verschieben nach rechts wird der Mitnehmerarm 42 in Eingriff mit dem obersten Block 28 der Aufnahmekette 27 gebracht. Durch Verschieben in Richtung des Pfeiles C wird nunmehr die einen frisch extrudierten Vorformling 6 tragende Aufnahmekette 27 in die Führungseinrichtung 38 hineingeschoben. Dabei erhält der von den Backen 31, 32 der Blöcke 28 getragene Vorformling 6 (Fig. 11) eine der Führungseinrichtung 38 entsprechende Krümmung, beispielsweis ein Gestalt eines "U".

Das Führungsrohr 39 ist über eine Welle 43 mit einem Antriebsmotor entsprechend dem Elektromotor 16 in Fig. 2 verbunden, so daß es aus der in Fig. 9 dargestellten, vertikalen Lage in die in Fig. 11 dargestellte horizontale Lage umgeklappt werden kann.

Wenn die den Vorformling 6 tragende Aufnahmekette 27 in das Führungsrohr 39 voll eingetreten ist, wird der Mitnehmerarm 42 (durch Verschiebung in Richtung des Pfeiles D) abgelöst. Anschließend wird das Führungsrohr 39 zusammen mit der Aufnahmekette 27 und dem von dieser gehaltenen, vorgekrümmten Vorformling 6 in die Horizontale verschwenkt (Fig. 11), worauf nach Lösen der Backen 31,32 der Vorformling 6 in die bereitstehende, untere Formhälfte 21 fallen kann. Anschließend wird, wie im Zusammenhang mit Fig. 1 - 8 beschrieben, weiter verfahren.

Schließlich werden die Führungseinrichtung 38 wieder in die Vertikale verschwenkt und die Aufnahmekette 27 über den Mitnehmerarm 42 in die in Fig. 9 dargestellte Lage zurückverschoben, so daß ein weiterer Vorformling extrudiert und aufgenommen werden kann.

Bei der in Fig. 9 - 11 dargestellten Ausführungsform wird die Aufnahmekette 27 von dem Mitnehmerarm 42 in das Führungsrohr 39 hineingedrückt. Statt dessen könnte am untersten Block 28 der Kette 27 auch eine Zieheinrichtung, beispielsweise in Gestalt eines durch das Rohr 39 hindurch verlaufenden Drahtes vorgesehen sein, so daß die Aufnahmekette 27 durch Zugwirkung in die Führungseinrichtung 38 eingebracht werden kann.

Auch mit Hilfe einer Führungseinrichtung 38 der beschriebenen Art lassen sich verhältnismäßig komplizierte, mehrfach gekrümmte Vorformlinge 6 gewinnen, wenn nur das Rohr 39 entsprechend gebogen ist. Insbesondere lassen sich auch mit der Führungseinrichtung 38 dreidimensional gekrümmte Vorformlinge herstellen, wenn das Führungsrohr 39 in drei Dimensionen gebogen ist. In diesem Falle muß dann lediglich dafür Sorge getragen werden, daß auch die Gelenkverbindung zwischen den einzelnen Blöcken 28 der Aufnahmekette 27 nach drei Dimensionen hin beweglich ist. Es ist so beispielsweise möglich, Vorformlinge in Gestalt einer dreidimensional verlaufenden Spirale vorzukrümmen.

Wie aus Fig. 11 ersichtlich, greifen die schwenkbaren Backen 31, 32 nur mit sehr kleinen Berührungsflächen am Vorformling 6 an, so daß dieser während seiner Vorkrümmung praktisch keine Wärmeverluste erfährt.

Anstatt dem Vorformling 6 mit den Backen 31, 32 an den Blöcken 28 zu halten, können letztere auch, ähnlich wie die Leistenteile 8,9 gemäß Fig. 4 ausgebildet und mit einer Saugeinrichtung verbunden sein und den Vorformling 6 somit durch Unterdruck festhalten. An der grundsätzlichen Wirkungsweise ändert sich hierdurch nichts. Umgekehrt könnten auch die Leistenteile 8,9 anstatt der Bohrungen 14 schwenkbare Backen 31,32 zur Halterung des Vorformlings 6 aufweisen.

Obwohl es sich als besonders günstig erwiesen hat, den in horizontale Lage verbrachten Vorformling (Fig. 6 und 11) von oben her in die untere Formhälfte 21 einzubringen, ist es grundsätzlich auch möglich, das Umklappen der Aufnahmeeinrichtung 7 und der Führungseinrichtung 38 in die Horizontale zu vermeiden und den vorgekrümmten Vorformling unmittelbar aus einer mehr oder weniger vertikal ausgerichteten Lage in die Formhälften der Blasform einzubringen, wobei die Formhälften der Blasform dann ebenfalls im wesentlichen vertikal angeordnet werden.

Bei den dargestellten Ausführungsformen des Verfahrens wird zuerst im wesentlichen in vertikalen Ebenen vorgekrümmt, dann der vorgekrümmte Vorformling 6 in die Horizontale geklappt. Prinzipiell ist es auch möglich, insbesondere bei der Ausführungsform gemäß Fig. 1 - 8, den Vorformling zuerst in die Horizontale zu klappen und dann die Vorkrimmung auszuführen. Eine dritte Möglichkeit besteht darin, den Vorformling gleichzeitig vorzukrümmen und in die Horizontale zu klappen.

In Fig. 9 kann am Einlaufende des Rohres 39 auch ein Trichter od. dgl. angeordnet sein, der das Einführen der Aufnahmekette 27 erleichtert. Alternativ können bereits während des Extrudierens des Vorformlings 6 einige Blöcke 28 der Kette 27 im vertikal verlaufenden Zweig des Führungsrohres 39 angeordnet sein.

Die Führungseinrichtung 38 kann auch an dem in Fig. 9 oben liegenden Ende der Aufnahmekette 27 angeordnet sein. Die Schiebeeinrichtung 41 verbringt dann zunächst die den Vorformling 6 tragende Kette 27 aus der vertikalen Achse der Düse 5 heraus und zieht dann die Blöcke 28 der kette 27 nacheinander in die Führungseinrichtung ein und durch sie hindurch, so daß der Vorformling 6 entsprechend gekrümmt wird.

## Patentansprüche

1. Verfahren zum Blasformen von gekrümmten Hohlkörpern aus Kunststoff, bei dem ein schlauchförmiger Vorformling (6) aus einer Extruderdüse (5) geradlinig vertikal von oben nach unten extrudiert, gekrümmt, in eine Blasform (2) eingebracht und in dieser zu dem Hohlkörper aufgeblasen wird, dadurch gekennzeichnet, daß
a) das Extrudieren des Vorformlings (6) entlang einer äußeren Aufnahme (7, 27) erfolgt und danach der Vorformling mit seiner Außenseite an der Aufnahme befestigt wird;
b) das Abtrennen des Vorformlings von der Extruderdüse (5) nach den Befestigen an der Aufnahme erfolgt;
c) das Krümmen des Vorformlings (6) durch Formveränderung der Aufnahme erfolgt und
d) das Einbringen des gekrümmten Vorformlings (6) in die Blasform (2) unter Loslösen des Vorformlings von der Aufnahme (7, 27) erfolgt.

2. Vorrichtung zur Durchführung des Verfahrens nach Anspruch 1, mit einer Einrichtung zum Krümmen des Vorformlings (6) und mit einer aus zwei Formhälften (21, 22) bestehenden Blasform (2), dadurch gekennzeichnet, daß

a) die Einrichtung zum Krümmen des Vorformlings (6) eine sich entlang dem extrudierten Vorformling und an dessen Außenseite erstreckende Aufnahme (7, 27) und Befestigungsmittel (14; 31, 32) zum Befestigen des Vorformlings mit seiner Außenseite an der Aufnahme aufweist;

b) die Aufnahme (7, 27) beweglich miteinander verbundene Aufnahmeteile (8, 9; 28) umfaßt, an denen die Befestigungsmittel (14; 31, 32) angeordnet sind;

c) die Aufnahme (7, 27) durch Klappmittel (15, 16; 43) aus der Vertikalen in die Horizontale umklappbar ist und

d) die untere der horizontal angeordneten Formhälften (21) der Blasform (2) zu der in die Horizontale umgeklappten Aufnahme (7, 27) derart einstellbar ist, daß der gekrümmte Vorformling (6) in sie einbringbar ist.

3. Vorrichtung nach Anspruch 2, dadurch gekennzeichnet, daß zum Befestigen und Vorkrümmen des Vorformlings (6) eine der Länge des Vorformlings entsprechende Aufnahmeleiste (7) vorgesehen ist, an welcher der Vorformling befestigbar ist, und daß die Leiste aus mehreren, gelenkig miteinander verbundenen Leistenteilen (8, 9) besteht, die durch Kraftantrieb relativ zueinander beweglich sind.

4. Vorrichtung nach Anspruch 2, dadurch gekennzeichnet, daß zum Befestigen und Krümmen des Vorformlings (6) gelenkig zu einer Aufnahmekette (27) miteinander verbundene Kettenglieder (Blöcke 28) vorgesehen sind, die durch eine Führungseinrichtung (38) hindurch bewegbar sind und hierbei den Vorformling krümmen.

5. Vorrichtung nach einem der Ansprüche 2 bis 4, dadurch gekennzeichnet, daß an der Aufnahmeleiste (7) und den Blöcken (28) Saugöffnungen (14) zum lösbaren Festhalten des Vorformlings (6) angeordnet sind.

6. Vorrichtung nach einem der Ansprüche 2 bis 4, dadurch gekennzeichnet, daß an der Aufnahmeleiste (7) und den Blöcken (28) schwenkbare Backen (31, 32) zum lösbaren Festhalten des Vorformlings (6) angeordnet sind.

## Claims

1. A process for blow moulding bent hollow bodies made of plastic in which a tubular intermediate form (6) is extruded in a straight line vertically downwards from above from an extruder nozzle (5), bent, and then introduced into a blowing mould (2) and blown in the latter to form the hollow body, characterized in that

a) the intermediate form (6) is extruded along an external retaining element (7, 27) and thereafter the intermediate form is fastened by means of its outside to the retaining element;

b) separation of the intermediate form from the extruder nozzle (5) occurs after it is fastened to the retaining element;

c) bending of the intermediate form (6) occurs by altering the shape of the retaining element and

d) introduction of the bent intermediate form (6) into the blowing mould (2) occurs with the detachment of the intermediate form from the retaining element (7, 27).

2. A device for performing the process described in Claim 1, comprising a device for bending the intermediate form (6) and a blowing mould (2) consisting of two half-moulds (21, 22), characterized in that

a) the device for bending the intermediate form (6) comprises a retaining element (7, 27) extending along the outer side of the extruded intermediate form and fastening means (14; 31, 32) for attaching the outside of the intermediate form to the retaining element;

b) the retaining element (7, 27) comprises parts of the retaining element (8) which are movably connected together and on which the fastening means (14; 31, 32) are located;

c) the retaining element (7, 27) can be swung from the vertical into the horizontal position by tipping means (15, 16; 43) and

d) the lower horizontally arranged half-mould (21) of the blowing mould (2) is adjustable relative to the retaining element (7, 27) tipped into the horizontal position in such a way that the bent intermediate form (6) can be inserted in it.

3. A device according to Claim 2, characterized in that for the purpose of fastening and pre-bending the intermediate form (6), a retaining bar (7) corresponding in length to the intermediate form is provided, to which the intermediate form can be attached, and in that the bar consists of a plurality of bar components (8, 9) pivotably linked to one another, which can be moved relative to one another by a mechanical drive.

4. A device according to Claim 2, characterized in that links of a chain (blocks 28) which are pivotably linked to one another to form a retaining chain (27) are provided for the purpose of fastening and bending the intermediate form (6), which links can be moved through a guiding device (38), thereby bending the intermediate form.

5. A device according to any one of Claims 2 to 4, characterized in that suction openings (14) are located on the retaining bar (7) and on the blocks (28) for releasable attachment of the intermediate form (6).

6. A device according to any one of Claims 2 to 4, characterized in that pivotable jaws (31, 32) are located on the retaining bar (7) and on the blocks (28) for releasable attachment of the intermediate form (6).

## Revendications

1. Procédé de moulage par soufflage de corps creux cintrés, en matière plastique, selon lequel une ébauche tubulaire (6) est extrudée d'une filière d'extrusion (5), de manière rectiligne et verticalement du haut vers le bas, puis est cintrée et introduite dans un moule de soufflage (2) dans lequel elle est alors moulée par soufflage pour constituer le corps creux, caractérisé en ce que,

a) l'extrusion de l'ébauche (6) s'effectue le long d'un porte-pièce extérieur (7, 27), l'ébauche (6) étant ensuite fixée par sa face externe, sur le porte-pièce, b) l'ébauche est séparée de la filière d'extrusion (5) après la fixation sur le porte-pièce, c) le cintrage de l'ébauche (6) s'effectue en modifiant la forme du porte-pièce, et

d) l'introduction de l'ébauche cintrée (6) dans le moule de soufflage (2) se fait tout en détachant l'ébauche du portepièce (7,27).

2. Installation pour la mise en œuvre du procédé selon la revendication 1, comportant un dispositif de cintrage de l'ébauche (6) ainsi qu'un moule de soufflage (2) composé de deux demi-moules (21, 22), caractérisée en ce que,

a) le dispositif de cintrage de l'ébauche (6) comporte un porte-pièce (7, 27) s'étendant le long de l'ébauche extrudée et sur son côté externe, ainsi que des moyens de fixation (14; 31, 32) destinés à fixer l'ébauche, par sa face externe, sur le porte-pièce,

b) le porte-pièce (7, 27) comprend des parties de porte-pièce (8, 9; 28) reliées entre elles de manière articulée, et sur lesquelles sont agencés les moyens de fixation (14; 31, 32),

c) le porte-pièce (7, 27) peut être basculé de la position verticale en position horizontale, à l'aide de moyens de basculement (15, 16; 43), et

d) le demi-moule inférieur (21) des parties de moule agencées horizontalement, du moule de soufflage (2), est orientable par rapport au porte-pièce (7, 27) basculé en position horizontale, de manière à ce que l'ébauche cintrée (6) puisse y être introduite.

3. Installation selon la revendication 2, caractérisée en ce que pour la fixation et le cintrage de l'ébauche (6) est prévue une barre porte-pièce (7) de longueur adaptée à celle de l'ébauche (6), et sur laquelle l'ébauche peut être fixée, et en ce que la barre se compose de plusieurs tronçons de barre (8, 9) qui sont reliés de manière articulée et qui sont mobiles entre eux au moyen d'un entraînement mécanique.

4. Installation selon la revendication 2, caractérisée en ce que des maillons de chaîne (blocs 28) reliés entre eux de manière articulée pour constituer une chaîne portepièce (27), sont prévus pour la fixation et le cintrage de l'ébauche (6), les maillons de chaîne pouvant être déplacés au travers d'un dispositif de guidage (38) pour provoquer le cintrage de l'ébauche.

5. Installation selon l'une des revendications 2 à 4 caractérisée en ce que des ouvertures d'aspiration (14) sont agencées sur la barre porte-pièce (7) et les blocs (28) en vue de maintenir de manière amovible l'ébauche (6).

6. Installation selon l'une des revendications 2 à 4 caractérisée en ce que des mors pivotants (31, 32) sont agencés sur la barre porte-pièce (7) et les blocs (28), en vue de maintenir de manière amovible l'ébauche (6).

# Fig.1

**Fig.9**  **Fig.10**  **Fig.11**

EP 0 248 306 B1